# EUROPÄISCHE PATENTSCHRIFT

(11) **EP 3 649 692 B1**
(45) Veröffentlichungstag und Bekanntmachung des Hinweises auf die Patenterteilung: **24.02.2021**
(21) Anmeldenummer: 18804521.5
(22) Anmeldetag: 31.10.2018
(51) Int. Cl.: H01M 8/04089, H01M 8/04082, H01M 8/04313, H01M 8/04664, G01M 3/02

(54) **BRENNSTOFFZELLENSYSTEM MIT INTEGRIERTEN GASANSCHLÜSSEN ZUM ANSCHLUSS AN EINE EXTERNE PRÜFGASVERSORGUNG**
FUEL CELL SYSTEM HAVING INTEGRATED GAS CONNECTIONS FOR CONNECTION TO AN EXTERNAL TEST GAS SUPPLY
SYSTÈME DE CELLULES À COMBUSTIBLE AVEC RACCORDS DE GAZ INTÉGRÉS POUR LE RACCORDEMENT À UNE ALIMENTATION EN GAZ DE TEST EXTERNE

(30) Priorität: 03.12.2017 DE 102017221741
(43) Veröffentlichungstag der Anmeldung: 13.05.2020
(73) Patentinhaber: Audi AG, 85045 Ingolstadt (DE); Volkswagen AG, 38440 Wolfsburg (DE)
(72) Erfinder: DENECKE, Jan, 38110 Braunschweig (DE); KIRCHHOFF, Maren Ramona, 38102 Braunschweig (DE)
(86) Internationale Anmeldenummer: PCT/EP2018/079787
(87) Internationale Veröffentlichungsnummer: WO 2019/105673

(56) Entgegenhaltungen:
- WO-A1-2006/096956
- DE-A1-102007 040 837
- DE-A1-102015 008 293
- US-A1- 2007 292 726

## Beschreibung

Die Erfindung betrifft ein Brennstoffzellensystem, das eigerichtet ist, an eine externe Prüfgasversorgung angeschlossen zu werden.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die sogenannte Membran-Elektroden-Anordnung (MEA für membrane electrode assembly), die ein Gefüge aus einer ionenleitenden (meist protonenleitenden) Membran und jeweils einer beidseitig an der Membran angeordneten katalytischen Elektrode (Anode und Kathode) ist. In der Regel wird die Brennstoffzelle durch eine Vielzahl im Stapel (stack) angeordneter MEA gebildet, deren elektrische Leistungen sich addieren. Zwischen den einzelnen Membran-Elektroden-Anordnungen sind in der Regel Bipolarplatten (auch Flussfeld- oder Separatorplatten genannt) angeordnet, welche eine Versorgung der Einzelzellen mit den Betriebsmedien, also den Reaktanten, sicherstellen und üblicherweise auch der Kühlung dienen. Zudem sorgen die Bipolarplatten für einen elektrisch leitfähigen Kontakt zu den Membran-Elektroden-Anordnungen.

Im Betrieb der Brennstoffzelle wird der Brennstoff (Anodenbetriebsmedium), insbesondere Wasserstoff H₂ oder ein wasserstoffhaltiges Gasgemisch, über ein anodenseitiges Flussfeld der Bipolarplatte der Anode zugeführt, wo eine elektrochemische Oxidation von H₂ zu Protonen H⁺ unter Abgabe von Elektronen stattfindet (H₂ → 2 H⁺ + 2 e⁻). Über den Elektrolyten oder die Membran, welche die Reaktionsräume gasdicht voneinander trennt und elektrisch isoliert, erfolgt ein (wassergebundener oder wasserfreier) Transport der Protonen aus dem Anodenraum in den Kathodenraum. Die an der Anode bereitgestellten Elektronen werden über eine elektrische Leitung der Kathode zugeleitet. Der Kathode wird über ein kathodenseitiges Flussfeld der Bipolarplatte Sauerstoff oder ein sauerstoffhaltiges Gasgemisch (zum Beispiel Luft) als Kathodenbetriebsmedium zugeführt, sodass eine Reduktion von O₂ zu O²⁻ unter Aufnahme der Elektronen stattfindet (½ O₂ + 2 e⁻ → O²⁻). Gleichzeitig reagieren im Kathodenraum die Sauerstoffanionen mit den über die Membran transportierten Protonen unter Bildung von Wasser (O²⁻ + 2 H⁺ → H₂O).

Brennstoffzellensysteme, die in Fahrzeugen verbaut sind, verfügen derzeit über kein festgelegtes Diagnose- und Wartungskonzept. Jedoch unterliegen die verschiedenen Komponenten eines Brennstoffzellensystems, z.B. der Brennstoffzellenstapel selbst, hier beispielsweise Membran, Elektroden, Dichtungen etc., Alterungserscheinungen, die Wartungen erforderlich erscheinen lassen. Derzeit werden Brennstoffzellensysteme für eine Wartung aus dem Fahrzeug entnommen und in ein Systemprüfstand integriert, was mit einem hohen Zeitaufwand sowie einem hohen Aufwand an Infrastruktur einhergeht. Für eine Überprüfung oder Regenerationsmaßnahme des Brennstoffzellenstapels selbst, beispielsweise seiner Membran oder Elektroden, muss darüber hinaus der Stapel aus dem Brennstoffzellensystem ausgebaut und in einem Stapelprüfstand getestet werden. Dies erhöht die Zeit- und Infrastrukturanforderungen nochmals.

DE 10 2007 002 426 A1 offenbart ein Diagnoseverfahren und eine Diagnosevorrichtung für eine Brennstoffzelleneinheit. Dabei wird der Brennstoffzelle Wasserstoff aus einer externen Zufuhr und Stickstoff über eine in die Luftzufuhrleitung mündende Leitung zugeführt. Mittels der Diagnosevorrichtung wird eine Zyklovoltametrie (CV) durchgeführt, um Alterungszustände der Membran oder Elektroden zu bestimmen.

Aus DE 10 2013 213 101 A1 ist ein Diagnosegerät bekannt, das über Diagnoseverbindern elektrisch mit dem Brennstoffzellenstapel verbunden wird, um eine Spannungsüberwachung durchzuführen.

DE 10 2015 210 836 A1 beschreibt ein Diagnoseverfahren und -gerät zur Ermittlung eines Zustands eines Brennstoffzellenstapels. Hierzu wird der Brennstoffzellenstapel mit dem Diagnosegerät verbunden, mit definierten Gaszuständen und/oder Spannungs- oder Stromzuständen beaufschlagt und Daten des Brennstoffzellenstapels werden ausgewertet.

US 2007/292726 A1 beschreibt ein Brennstoffzellensystem, das einen Brennstoffzellenstapel, ein System zur Brennstoffzufuhr und Ventile umfasst, die einen abgetrennten und abgeschlossenen Abschnitt in dem Brennstoffzellensystem zwischen dem System zur Brennstoffzufuhr und dem Brennstoffzellenstapel bilden. Durch Befüllung dieses Abschnitts mit Kontrollgas sollen Undichtigkeiten und resultierende Leckagen identifiziert werden.

WO 2006/096956 A1 beschreibt eine Vorrichtung und ein Verfahren zur Diagnoseprüfung elektrochemischer Zellenstapel. Der Aufbau umfasst einen Multiplexer zum Schalten von Strom auf eine oder mehrere Zellen, eine Spannungsanzeige zur Darstellung der Spannungen zwischen Anoden- und Kathoden-Platten, eine Stromversorgung und eine Gasversorgung zur Bereitstellung von Brennstoffgas und Nicht-Brennstoffgas. Die Vorrichtung bzw. das Verfahren ist eingerichtet, um Gas-Leckagen, Durchfluss der Reaktanden durch die Membran oder kurzgeschlossene Zellen festzustellen.

DE 10 2007 040837 A1 offenbart ein Verfahren zum zerstörungsfreien Erkennen eines Gaslecks einer Brennstoffzelle sowie eine Brennstoffzellenanlage zur Durchführung eines solchen Verfahrens. Dazu erfolgt die Befüllung des Anodengasraums mit einem ersten Testgas, die Befüllung des Kathodengasraums mit einem zweiten Testgas und anschließend die Überwachung des Spannungsverlaufs der Zelle ohne Anschluss einer elektrischen Last.

Der vorliegenden Erfindung liegt nun die Aufgabe zugrunde, ein Brennstoffzellensystem zur Verfügung zu stellen, das mit geringem Aufwand, vorzugsweise im verbauten Zustand (on Board), eine Diagnose und/oder Regenerierung des Brennstoffzellenstapels erlaubt.

Diese Aufgabe wird durch ein Brennstoffzellensystem mit den Merkmalen des unabhängigen Anspruchs gelöst.

Das erfindungsgemäße Brennstoffzellensystem umfasst einen Brennstoffzellenstapel; eine Anodenversorgung mit einem Anodenversorgungspfad zur Zuführung eines Anodenbetriebsgases zu dem Brennstoffzellenstapel und einem Anodenabgaspfad zur Abführung eines Anodenabgases aus demselben; eine Kathodenversorgung mit einem Kathodenversorgungspfad zur Zuführung eines Kathodenbetriebsgases zu dem Brennstoffzellenstapel und einem Kathodenabgaspfad zur Abführung eines Kathodenabgases aus demselben; wobei in dem Anodenversorgungspfad und in dem jeweils ein Absperrelement angeordnet ist und zwischen dem Absperrelement und dem Brennstoffzellenstapel jeweils ein Gasanschluss zum Anschluss an eine externe Prüfgasversorgung angeordnet ist, und/oder in dem Kathodenversorgungspfad und in dem Kathodenabgaspfad jeweils ein Absperrelement angeordnet ist und zwischen dem Absperrelement und dem Brennstoffzellenstapel jeweils ein Gasanschluss zum Anschluss an eine externe Prüfgasversorgung angeordnet ist.

Erfindungsgemäß ist somit anoden- und/oder kathodenseitig jeweils im Versorgungs- als auch im Abgaspfad jeweils eine Kombination aus Absperrelement und Gasanschluss angeordnet. Hierdurch ist es möglich, den Brennstoffzellenstapel anoden- bzw. kathodenseitig mit einer externen Gasversorgung zu beaufschlagen, um so verschiedene Diagnose- und/oder Wiederherstellungsmaßnahmen am Brennstoffzellenstapel durchzuführen. Insbesondere ist dies möglich, ohne das Brennstoffzellensystem aus dem Fahrzeug oder den Brennstoffzellenstapel aus der Anoden- und Kathodenversorgung des Brennstoffzellensystems auszubauen. Das Brennstoffzellensystem verfügt somit über integrierte Wartungsschnittstellen, die eine unaufwendige Prüfung und Wartung des Brennstoffzellenstapels erlauben.

Bei den Absperrelementen kann es sich unabhängig voneinander um ein beliebiges Element handeln, das eine Unterbrechung des regulären Strömungswegs der Betriebsgase bzw. -abgase erlaubt. In Frage kommen beispielsweise Ventile und Klappen. Derartige Absperrelemente sind häufig zumindest teilweise bereits in bestehenden Brennstoffzellensystemen vorhanden, beispielsweise um die Zufuhr der Betriebsgase in den Stapel zu regeln oder um den Stapel nach seinem Herunterfahren von der Umgebung zu trennen.

Die Gasanschlüsse sind jeweils zwischen einem Absperrelement und dem Stapel angeordnet. Somit kann, um den Anschluss einer externen Prüfgasversorgung zu erlauben, jeweils das Absperrelement geschlossen und der Anschluss der externen Prüfgasversorgung hergestellt werden.

Die Gasanschlüsse stellen jeweils eine fluidführende Abzweigung aus den Versorgungs- bzw. Abgaspfaden dar und können beispielsweise als gasdichte T- oder Y-Stücke ausgebildet sein. Die Gasanschlüsse können ihrerseits neben einer von dem Versorgungspfad bzw. Abgaspfad abzweigende Wartungsleitung über ein Absperrelement verfügen, welches ausgebildet ist, die abzweigende Wartungsleitung gasdicht zu verschließen oder fluidführend zu öffnen, um die Verbindung mit der externen Prüfgasversorgung herzustellen. Ferner verfügen die Gasanschlüsse über ein Anschlussstück, welches eine gasdichte mechanische Verbindung mit einem Leitungssystem der externen Gasversorgung ermöglicht.

Gemäß einer bevorzugten Ausgestaltung der Erfindung sind die Gasanschlüsse selbstverschließend ausgebildet. Demnach führt die mechanische Abkopplung der externen Gasversorgung zu einem selbsttätigen Schließen des Gasanschlusses und die mechanische Ankopplung der externen Gasversorgung an das Anschlussstück des Gasanschlusses zu einem selbsttätigen Öffnen des Gasanschlusses. Somit sichert der selbstverschließende Gasanschluss eine sichere Erkennung der korrekten Montage (ähnlich einer Pilotlinie eines elektrischen Hochvoltsystems), die eine Freigabe der externen Gasversorgung erst nach korrekter Montage sicherstellt.

In bevorzugter Ausgestaltung der Erfindung sind die Gasanschlüsse angeordnet und ausgebildet, in einem Zustand, in welchem das Brennstoffzellensystem in einem Fahrzeug verbaut ist, an die externe Prüfgasversorgung angeschlossen zu werden. Mit anderen Worten sind die Gasanschlüsse auch im Montagezustand des Brennstoffzellensystems zugänglich, sodass die Wartung des Systems keinen Ausbau des Brennstoffzellenstapels erfordert.

In vorteilhaften Ausführungen umfasst das Brennstoffzellensystem ferner ein Diagnosemodul, das eingerichtet ist, die Absperrelemente und Gasanschlüsse der Anodenversorgung und/oder die Absperrelemente und Gasanschlüsse der Kathodenversorgung zu steuern. So kann das Diagnosemodul etwa die Absperrelemente öffnen, wenn es eine korrekte Montage der externen Gasversorgung an die Gasanschlüsse erkennt. Ferner kann das Diagnosemodul eingerichtet sein, die externe Gasversorgung zu starten, zu stoppen und zu regeln. Besonders bevorzugt ist die externe Gasversorgung in das Diagnosemodul integriert. Zu diesem Zweck beinhaltet das Diagnosemodul beispielsweise Gasspeicher, Gasleitungen, Fördereinrichtungen, weitere Absperrvorrichtungen und dergleichen.

Gemäß einer weiteren bevorzugten Ausgestaltung umfasst das Brennstoffzellensystem ferner ein Diagnosemodul, das eingerichtet ist, bei an den

Gasanschlüssen der Anodenversorgung angeschlossener Prüfgasversorgung und/oder bei an den Gasanschlüssen der Kathodenversorgung angeschlossener Prüfgasversorgung eine Diagnosefunktion zur Überprüfung des Brennstoffzellensystems, eine Wartungsfunktion zur Wartung des Brennstoffzellensystems oder eine Kombination von diesen durchzuführen. Zu diesem Zweck kann das Diagnosemodul Kommunikationsschnittstellen umfassen, welche elektrische und/oder thermodynamische Zustandsparameter des Brennstoffzellensystems und insbesondere des Brennstoffzellenstapels empfangen und auswerten. Hierzu gehören beispielsweise die Stromstärke des Brennstoffzellenstapels, die Spannung des Brennstoffzellenstapels, welche die Gesamtspannung oder Einzelzellenspannungen umfassen kann, Druck, Temperatur und dergleichen mehr.

Ferner kann das Diagnosemodel zum Zwecke der Ausführung von Diagnose- und/oder Wartungsfunktionen entsprechende Steuer- und Auswertealgorithmen umfassen, um die entsprechenden Funktionen auszuführen. Hierzu können auch Kennfelder in computerlesbarer Form in dem Diagnosemodul gespeichert vorliegen.

Beispielsweise ist das Diagnosemodul ausgebildet, eine Dichtigkeitsprüfung des Brennstoffzellenstapels, der Anodenversorgung und/oder der Kathodenversorgung durchzuführen. Die Dichtigkeitsprüfung erlaubt, Leckagen des Systems, die beispielsweise alterungsbeding auftreten können, zu detektieren und zu bewerten.

Weiterhin kann das Diagnosemodul ausgebildet sein, eine Diagnosefunktion zur Bestimmung eines Zustands einer Membran des Brennstoffzellenstapels durchzuführen. Insbesondere kann die Diagnosefunktion die Bestimmung eines Stoffstroms molekularen Wasserstoffs H₂ durch die Membran beinhalten. Hierdurch werden Löcher in der Membran erkannt, die bedingt durch Austrocknen, unzulässigen Spannungswerten oder extremer thermischer Beanspruchung entstehen können.

Ferner kann das Diagnosemodul ausgebildet sein, eine Diagnosefunktion zur Bestimmung eines Zustands der katalytischen Elektroden des Brennstoffzellenstapels durchzuführen. Hierdurch können alterungsbedingte Prozesse, die zur Abnahme der Leistungsdichte führen, detektiert werden. Diese umfassen etwa eine Korrosion des Kohlenstoffträgers des katalytischen Materials, eine Agglomeration oder ein Auswaschen des katalytischen Edelmetalls oder die Ablagerung von Verunreinigungen auf dem Katalysator (Vergiftung).

Ferner kann das Diagnosemodul ausgebildet sein, eine Regenerationsfunktion zur Beseitigung einer festgestellten reversiblen Schädigung des Brennstoffzellenstapels durchzuführen. Mit besonderem Vorteil kann eine solche Regenerationsfunktion auf die Wiederherstellung einer katalytischen Aktivität von katalytischen Elektroden des Brennstoffzellenstapels, beispielsweise durch Beseitigung einer Kontamination der katalytischen Elektroden, abzielen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnung erläutert. Es zeigt:

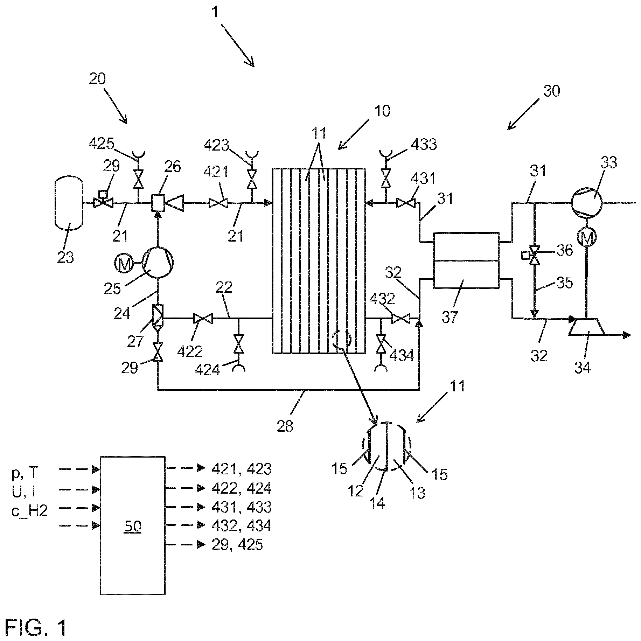

- Figur 1: ein Blockschaltbild eines Brennstoffzellensystems gemäß einer bevorzugten Ausgestaltung der Erfindung.

Figur 1 zeigt ein insgesamt mit 1 bezeichnetes Brennstoffzellensystem gemäß einer bevorzugten Ausgestaltung der vorliegenden Erfindung. Das Brennstoffzellensystem 1 ist Teil eines nicht weiter dargestellten Fahrzeugs, insbesondere eines Elektrofahrzeugs, das einen Elektrotraktionsmotor aufweist, der durch das Brennstoffzellensystem 1 mit elektrischer Energie versorgt wird.

Das Brennstoffzellensystem 1 umfasst als Kernkomponente einen Brennstoffzellenstapel 10, der eine Vielzahl von in Stapelform angeordneten Einzelzellen 11 aufweist, die durch abwechselnd gestapelte Membran-Elektroden-Anordnungen (MEA) 14 und Bipolarplatten 15 ausgebildet werden (siehe Detailausschnitt). Jede Einzelzelle 11 umfasst somit jeweils eine MEA 14, die eine hier nicht näher dargestellte ionenleitfähige Polymerelektrolytmembran oder einen anderen Festelektrolyten aufweist sowie beidseits daran angeordnete katalytische Elektroden, nämlich eine Anode und eine Kathode, welche die jeweilige Teilreaktion der Brennstoffzellenumsetzung katalysieren und insbesondere als Beschichtungen auf der Membran ausgebildet sein können. Die Anoden- und Kathodenelektrode weisen ein katalytisches Material auf, beispielsweise Platin, das auf einem elektrisch leitfähigen Trägermaterial großer spezifischer Oberfläche, beispielsweise einem kohlenstoffbasierten Material, geträgert vorliegt. Zwischen einer Bipolarplatte 15 und der Anode wird somit ein Anodenraum 12 ausgebildet und zwischen der Kathode und der nächsten Bipolarplatte 15 der Kathodenraum 13. Die Bipolarplatten 15 dienen der Zuführung der Betriebsmedien in die Anoden- und Kathodenräume 12, 13 und stellen ferner die elektrische Verbindung zwischen den einzelnen Brennstoffzellen 11 her. Optional können Gasdiffusionslagen zwischen den Membran-Elektroden-Anordnungen 14 und Bipolarplatten 15 angeordnet sein.

Um den Brennstoffzellenstapel 10 mit den Betriebsmedien zu versorgen, weist das Brennstoffzellensystem 1 einerseits eine Anodenversorgung 20 und andererseits eine Kathodenversorgung 30 auf.

Die Anodenversorgung 20 umfasst einen Anodenversorgungspfad 21, welcher der Zuführung eines Anodenbetriebsmediums, beispielsweise Wasserstoff, in die Anodenräume 12 des Brennstoffzellenstapels 10 dient. Zu diesem Zweck verbindet der Anodenversorgungspfad 21 einen Druckspeicher 23 mit einem Anodeneinlass des Brennstoffzellenstapels 10. Der Anodenbetriebsdruck auf den Anodenseiten 12 des Brennstoffzellenstapels 10 ist über ein Druckregelventil 29 in dem Anodenversorgungspfad 21 einstellbar. Die Anodenversorgung 20 umfasst ferner einen Anodenabgaspfad 22, der das Anodenabgas aus den Anodenräumen 12 über einen Anodenauslass des Brennstoffzellenstapels 10 abführt. Darüber hinaus weist die Anodenversorgung 20 eine Rezirkulationsleitung 24 auf, welche den Anodenabgaspfad 22 mit dem Anodenversorgungspfad 21 verbindet. Die Rezirkulation von Brennstoff ist üblich, um den zumeist überstöchiometrisch eingesetzten Brennstoff dem Stapel zurückzuführen und zu nutzen. In der Rezirkulationsleitung 24 ist eine Fördereinrichtung 25, hier eine Strömungsmaschine, beispielsweise ein Gebläse oder eine Pumpe, angeordnet, mit welcher ein rezirkulierter Volumenstrom einstellbar ist. An einer Einmündungsstelle der Rezirkulationsleitung 24 in den Anodenversorgungspfad 21 ist ferner eine Strahlpumpe 26 angeordnet. Diese ist druckseitig mit dem Druckspeicher 23, saugseitig mit der Rezirkulationsleitung 24 und auslassseitig mit dem Brennstoffzellenstapel 10 verbunden. In dem Anodenabgaspfad 22 ist zudem ein Wasserabscheider 27 angeordnet, welcher die Abscheidung kondensierten Wassers erlaubt. Ferner ist der Anodenabgaspfad 22 mit einer Spülleitung 28 verbunden, die im dargestellten Beispiel in einen Kathodenabgaspfad 32 mündet, sodass das Anodenabgas und das Kathodenabgas über eine gemeinsame Abgasanlage abgeführt werden können. In alternativer Ausführung kann die Spülleitung 28 auch in die Umgebung münden. Ein Spülventil 29, das alternativ mit dem Wasserabscheider 27 kombiniert sein kann, ermöglicht den Ablass des Anodenabgases über die Spülleitung 28.

Die Kathodenversorgung 30 umfasst einen Kathodenversorgungspfad 31, welcher den Kathodenräumen 13 des Brennstoffzellenstapels 10 ein sauerstoffhaltiges Kathodenbetriebsmedium zuführt, insbesondere Luft, die aus der Umgebung angesaugt wird. Die Kathodenversorgung 30 umfasst ferner einen Kathodenabgaspfad 32, welcher das Kathodenabgas (insbesondere die Abluft) aus den Kathodenräumen 13 des Brennstoffzellenstapels 10 abführt und dieses gegebenenfalls einer nicht dargestellten Abgasanlage zuführt. Zur Förderung und Verdichtung des Kathodenbetriebsmediums ist in dem Kathodenversorgungspfad 31 ein Verdichter 33 angeordnet. In dem dargestellten Ausführungsbeispiel ist der Verdichter 33 als ein hauptsächlich elektromotorisch angetriebener Verdichter ausgestaltet, dessen Antrieb über einen Elektromotor erfolgt. Der Verdichter 33 kann ferner durch eine im Kathodenabgaspfad 32 angeordnete Turbine 34 (gegebenenfalls mit variabler Turbinengeometrie) unterstützend über eine gemeinsame Welle (nicht dargestellt) angetrieben werden.

Die Kathodenversorgung 30 weist gemäß dem dargestellten Ausführungsbeispiel ferner eine Wastegate-Leitung 35 auf, welche die Kathodenversorgungsleitung 31 mit der Kathodenabgasleitung 32 verbindet, also einen Bypass des Brennstoffzellenstapels 10 darstellt. Die Wastegate-Leitung 35 erlaubt, überschüssigen Luftmassenstrom an dem Brennstoffzellenstapel 10 vorbeizuführen, ohne den Verdichter 33 herunterzufahren. Ein in der Wastegate-Leitung 35 angeordnetes Regelventil 36 dient der Steuerung der Menge des den Brennstoffzellenstapel 10 umgehenden Kathodenbetriebsmediums.

Das Brennstoffzellensystem 1 kann ferner einen Befeuchter 37 aufweisen. Der Befeuchter 37 ist so in dem Kathodenversorgungspfad 31 angeordnet, dass er einerseits von dem Kathodenbetriebsgas und andererseits von dem Kathodenabgas durchströmbar ist, wobei das Kathodenbetriebsgas und das Kathodenabgas durch wasserdampfpermeable Membranen voneinander getrennt sind. Über die wasserdampfpermeablen Membranen wird eine Übertragung von Wasserdampf vom dem vergleichsweise feuchten Kathodenabgas (Abluft) auf das vergleichsweise trockene Kathodenbetriebsgas (Luft) bewirkt.

Das Brennstoffzellensystem 1 umfasst ferner ein in dem Anodenversorgungspfad 21 zwischen der Strahlpumpe 26 und dem Brennstoffzellenstapel 10 angeordnetes erstes Absperrelement 421, das eine Unterbrechung des Stroms des Anodenbetriebsmediums zwischen Speicher 23 und Stapel 10 erlaubt. Zwischen dem Absperrelement 421 und dem Brennstoffzellenstapel 10 ist ein erster Gasanschluss 423 zum Anschluss einer externen Prüfgasversorgung angeordnet. Der Gasanschluss 423 weist eine Wartungsleitung auf, die von dem Anodenversorgungspfad 21 abzweigt ist beispielsweise als T- oder Y-Stück ausgebildet. Die Wartungsleitung endet in einem Anschlussstück, das dem fluidmechanischen Anschluss der externen Prüfgasversorgung dient. Das Anschlussstück ist beispielsweise als ein Schnellverschluss ausgebildet, das bei einer Trennung der externen Prüfgasversorgung automatisch zu einem Schließen eines weiteren in der Wartungsleitung angeordneten Absperrelements führt. Gleichermaßen kann das Anschlussstück dergestalt ausgebildet sein, dass die korrekte Montage der externen Prüfgasversorgung zu einem automatischen Öffnen dieses Absperrelements führt. Alternativ, wenn auch weniger vorteilhaft, kann das Anschlussstück auch als eine Verschraubung oder dergleichen ausgebildet sein. Alternativ oder zusätzlich zu dem ersten Absperrelement 421 und dem ersten Gasanschluss 423 kann ein weiterer Gasanschluss 425 stromab des Regelventils 29 und stromauf der Einmündungsstelle der Rezirkulationsleitung 24 in dem Anodenversorgungspfad 21 angeordnet sein. Ein zweites Absperrelement 422 und ein zweiter zwischen Absperrelement 422 und Brennstoffzellenstapel 10 angeordneter Gasanschluss 424 sind in der Anodenabgasleitung 22 angeordnet.

Ferner sind in dem gezeigten Ausführungsbeispiel auch in der Kathodenversorgung 30 entsprechende Paare aus Absperrelement und Gasanschluss vorgesehen. So ist in dem Kathodenversorgungspfad 31 stromab des Befeuchters 37 und stromauf des Brennstoffzellenstapels 10 ein drittes Absperrelement 431 und stromab von diesem ein dritter Gasanschluss 433 vorgesehen. Stromab des Stapels 10 und stromauf des Befeuchters 37 ist ein viertes Absperrelement 432 in dem Kathodenabgaspfad 32 angeordnet und zwischen dem Brennstoffzellenstapel 10 und dem Absperrelement 432 ein vierter Gasanschluss 434. Sämtliche Absperrelemente 421, 422, 431 und 432 können als Ventile oder Gasklappen ausgebildet sein. Für die Ausgestaltung der Gasanschlüsse 424, 425, 433 und 434 treffen die für den Gasanschluss 423 gemachten Ausführungen zu.

Die in Figur 1 gezeigte Ausführung zeigt ein Beispiel, in welchem sowohl in der Anodenversorgung 20 als auch in der Kathodenversorgung 30 jeweils Absperrelemente und Gasanschlüsse vorhanden sind. Abhängig von der auszuführenden Diagnose oder Wartungsfunktion sind jedoch auch Ausführungen von der Erfindung eingeschlossen, bei denen nur in der Anodenversorgung 20 oder nur in der Kathodenversorgung 30 entsprechende Absperrelemente und Gasanschlüsse vorhanden sind. Des weiteren können kathodenseitig anstelle der Absperrelemente 431, 432 und Gasanschlüsse 433 und 434 auch entsprechende Absperrelemente und Gasanschlüsse zwischen dem Verdichter 33 und dem Befeuchter 37 bzw. in der Anodenabgasleitung 32 zwischen dem Befeuchter 37 und der Turbine 34 angeordnet sein. Eine solche Konstellation erlaubt auch gewisse Funktionen des Befeuchters 37 zu überprüfen.

Das Brennstoffzellensystem 1 umfasst ferner ein Diagnosemodul 50. Das Diagnosemodul ist einerseits eingerichtet, die Absperrelemente 421, 422, 431, 432 und gegebenenfalls 29 zu steuern. Ferner ist es ausgebildet, die Gasanschlüsse 423, 424, 433, 434 und gegebenenfalls 425, insbesondere deren Absperrelemente zu steuern. Ferner verfügt das Diagnosegerät über eine oder mehrere Prüfgasversorgungen (nicht dargestellt), welche insbesondere entsprechende Gasspeicher, Leitungssysteme und Fördereinrichtungen umfassen. Als Prüfgase können beispielsweise Wasserstoff H₂, Stickstoff N₂, Sauerstoff O₂, Luft, und/oder Mischungen dieser Gase vorgesehen sein.

Darüber hinaus ist das Diagnosemodul 50 eingerichtet, zumindest eine Diagnosefunktion zur Überprüfung des Brennstoffzellensystems und/oder zumindest eine Wartungsfunktion zur Wartung des Brennstoffzellensystems 1 durchzuführen. Vorzugsweise sind mehrere oder sämtliche dieser Funktionen in ein und demselben Diagnosemodul 50 integriert. Zur Durchführung dieser Funktionen verfügt das Diagnosemodul 50 über Kommunikationsschnittstellen, über welche Signale verschiedener Sensoren oder Messgeräte eingehen. Beispielsweise empfängt das Diagnosemodul die Signale von Druck- oder Temperatursensoren, die im Brennstoffzellensystem 1 oder im Diagnosemodul 50 verbaut sein können. Darüber hinaus empfängt das Diagnosemodul 50 auch elektrische Parameter des Brennstoffzellenstapels 10, insbesondere die erzeugte Stromstärke I oder Spannung U, bei der es sich um die Gesamtspannung des Stapels 10 und/oder um Einzelzellspannung der Zellen 11 handeln kann. Zudem sind für die verschiedenen Funktionen entsprechende Algorithmen und Kennfelder zur Ausführung der Diagnose und/oder Wartungsfunktionen in dem Diagnosemodul 50 abgelegt.

Die grundsätzliche Verfahrensweise des Systems zum Zwecke seiner Diagnose und/oder Regeneration wird beispielsweise in einer Werkstatt durchgeführt und ist wie folgt.

Bei heruntergefahrenem Brennstoffzellensystem 1 werden an die entsprechenden Gasanschlüsse 423 (bzw. 425) und 424 der Anodenversorgung 20 und/oder an den entsprechenden Gasanschlüssen 433 und 434 der Kathodenversorgung 30 Anschlüsse einer entsprechenden externen Prüfgasversorgung (beispielsweise H₂, N₂, O₂, Luft, etc.) angeschlossen. Sofern die Gasanschlüsse entsprechend ausgebildet sind, führt dies zu einem automatischen Öffnen der Absperrelemente der Gasanschlüsse. Vorzugsweise erkennt das Diagnosemodul 50 über entsprechende Sensoren den korrekten Anschluss. Sodann werden die entsprechenden in den Versorgungs- und Abgaspfaden angeordneten Absperrelemente 421 (bzw. 29), 422 und/oder 432 geschlossen, sofern sie nicht bereits im Wege des Herunterfahrens des Brennstoffzellensystems geschlossen wurden. Anschließend beginnt das Diagnosemodul 50 mit der Förderung des oder der entsprechenden Prüfgase, um so die Anodenräume 12 und/oder Kathodenräume 13 des Brennstoffzellenstapels 10 mit diesen Prüfgasen zu beaufschlagen. Abhängig von der durchgeführten Funktion liest das Diagnosemodul 50 die erforderlichen thermodynamischen und/oder elektrischen Parameter ein und wertet diese aus. Im Anschluss an eine Diagnosefunktion wird ein entsprechendes Ergebnis der Diagnose gespeichert und ausgegeben. Nachfolgend werden verschiedene Funktionen des Diagnosemoduls 50 näher erläutert.

### Dichtigkeitsprüfung Anode

Für die Dichtigkeitsbestimmung ist eine Ausstattung des Brennstoffzellensystems 1 mit den entsprechenden Absperrelementen 421 (bzw. 29) und 422 sowie den entsprechenden Gasanschlüssen 423 (bzw. 425) und 424 erforderlich. Nach dem Medienanschluss an den Gasanschlüssen 423 (bzw. 425) und 424, Öffnen der entsprechenden Absperrelemente der Gasanschlüsse und Schließen der Absperrelemente 421 (bzw. 29) und 422 erfolgt zunächst ein Spülen des Systems, um eine homogene Beaufschlagung des Systems mit dem Prüfgas zu gewährleisten. Sodann wird ein vorbestimmter Druck mit dem Prüfgas eingestellt. In einer statischen Variante des Verfahrens wird sodann die weitere Zufuhr des Prüfgases zum Brennstoffzellenstapel 10 unterbrochen und der Druckabfall über die Zeit registriert. In einer alternativen Verfahrensführung wird der Volumenstrom des Prüfgases in den Brennstoffzellenstapel so geregelt, dass ein konstanter Druck aufrechterhalten bleibt und der hierfür erforderliche Menge zugeführten Gases registriert. Das Diagnosemodul 50 wertet diese Messdaten (Druckabfall über die Zeit oder Menge des zugeführten Gases) aus und erzeugt einen Testreport, der elektronisch gespeichert und/oder über einen Ausdruck oder einen Bildschirm ausgegeben wird. Die Auswertung kann beispielsweise den Vergleich des ermittelten Messwerts (z.B. Druckabfall) mit einem zulässigen Grenzwert (Factory-Acceptance-Testwert) umfassen. Gegebenenfalls kann hier ein typischer Degenerationsverlauf in Abhängigkeit von dem Alter bzw. der Betriebsdauer des Systems Berücksichtigung finden.

### Dichtigkeitstest Kathode

Für eine entsprechende Dichtigkeitsmessung der Kathode des Brennstoffzellenstapels 10 werden die Gasanschlüsse 433 und 434 mit einer entsprechenden Testgasversorgung verbunden und ansonsten die Messung wie für die Anode beschrieben durchgeführt. Allerdings ist die Dichtigkeit der Kathodenseite des Brennstoffzellenstapels 10 von geringerer Bedeutung, da eventuelle Undichtigkeiten hier nicht zu einem Austritt eines gefahrenrelevanten Gases führen.

### Überprüfung Wasserstoffkonzentrationssensoren

Sofern das Brennstoffzellensystem 1 bzw. das Fahrzeug, in welchem dieses verbaut ist, über Wasserstoffkonzentrationssensoren verfügt, kann das Diagnosemodul 50 auch mit einer entsprechenden Funktion zur Überprüfung dieser Sensoren ausgestattet sein, welche insbesondere parallel zur Dichtigkeitsmessung der Anode durchgeführt werden kann. Relevante Orte für die Messung von Wasserstoff sind beispielsweise die Spülleitung 28 oder die Abgasleitung 32, ein den Brennstoffzellenstapel 10 umschließendes Stapelgehäuse oder dessen Abluft, der Motorraum, Fahrzeuginnen- oder Gepäckraum oder weitere teilgeschlossene Räume, in denen durch eine Leckage des H₂-Systems Wasserstoffansammlungen vorkommen können. Sofern an diesen Orten standardgemäß keine H₂-Sensoren vorhanden sind, kann die Messung auch durch Handmessgeräte unterstützt werden. Das Diagnosemodul 50 liest die Signale dieser Sensoren (c_H₂) ein und wertet diese aus. Dieses kann beispielsweise anhand einer Plausibilisierung des Messwertes in Korrelation zur Dichtigkeitsmessung erfolgen. Sofern beispielsweise eine Leckage des Systems detektiert wird, sollte ein entsprechender H₂-Sensor auch ausgetretenen Wasserstoff detektieren, sofern H₂ als Prüfgas verwendet wird. Zudem kann auch ein automatischer Nullabgleich der Konzentrationssensoren im Fahrzeug durchgeführt werden.

In einer Weiterbildung der Erfindung kann das System ferner Mittel umfassen, mit denen die Gassensoren gezielt mit Prüfgas beaufschlagbar sind, um deren Funktion zu prüfen. Diese Mittel können beispielsweise durch entsprechende spezielle Aufsätze oder Adapter auf die Sensordetektionsflächen umfassen. Plausibilisierung, Auswertung sowie automatische Kalibrierung der Konzentrationssensoren würden ebenfalls durch das Diagnosemodul 50 erfolgen.

### Dichtigkeitstest Membran

Über die Lebenszeit der Polymerelektrolytmembran des Brennstoffzellenstapels 10 können Undichtigkeiten/Löcher entstehen, die zu einem erhöhten H₂-Crossover durch die Membran führen. Dieser Wasserstoffstrom durch die Membran kann beispielsweise mit einem sogenannten Open-Cell-Voltage-Test (OCV) detektiert werden. Für diesen Diagnoseschritt wird die externe Gasversorgung sowohl an die anodenseitigen Schnittstellen 423 bzw. 425 und 424 als auch an die kathodenseitigen Schnittstellen 433 und 434 angeschlossen. Sodann erfolgt eine automatische Beschickung der Kathodenräume 13 mit Luft und der Anodenräume 12 mit Wasserstoff. Dabei wird die Zellspannung U überwacht und hinsichtlich eines Übertritts von Wasserstoff ausgewertet. Dieses kann beispielsweise erfolgen, indem die gemessene Zellspannung mit einer gespeicherten Sollspannung verglichen wird. Auch das Ergebnis dieses Tests wird gespeichert und/oder ausgegeben.

### Elektrodenregenerierung

Vorzugsweise verfügt das Diagnosemodul 50 auch über eine Regenerationsfunktion zur Beseitigung einer Kontamination der katalytischen Elektroden des Brennstoffzellenstapels 10. Hierbei werden einerseits Kontaminanten beispielsweise CO, die über die Medienstrecken bzw. die Medienzufuhr in die Elektroden eingetragen wurden, entfernt und andererseits gebildete Oxide des Edelmetalls, insbesondere Platinoxid durch Reduktion beseitigt. Zudem kann auch ganz allgemein die freie Katalysatoroberfläche, die durch Agglomerationserscheinungen reduziert wurde, vergrößert werden.

Für diese Regenerationsfunktion werden sowohl die anodenseitigen als auch die kathodenseitigen externen Gasanschlüsse mit der Testgasversorgung verbunden. Abhängig von der Art der Beeinträchtigung der katalytischen Elektroden des Brennstoffzellenstapels 10 werden gezielt bestimmte Gas- und Spannungszustände des Stapels 10 eingestellt, wobei insbesondere Luft bzw. Sauerstoff sowie Wasserstoff als Testgase verwendet werden. Das Diagnosemodul 50 stellt nach Verbinden der Gasanschlüsse automatisiert definierte Gas- und Betriebszustände ein, die beispielsweise umfassen Luft/Luft-Zustand, Luft/Luft-Startup, H₂/H₂-Zustand, H₂/H₂-Startup, feuchter Betrieb im Teillastbereich, feuchter Betrieb im Wechsel mit H₂/H₂-Zustand, etc. Gegebenenfalls kann auch eine Konditionierung mit weiteren Gaskomponenten, z.B. Stickstoff erfolgen.

Im Anschluss an eine Regenerationsfunktion kann ein Performance-Test mit Auswertung und Ausgabe eines Testreports erfolgen. Die Auswertung kann beispielsweise anhand eines Vergleichs mit einem Factory-Acceptance-Performance-Test erfolgen. Hierfür kann eine irreversible oder reversible Degradation angenommen werden, die anhand der Betriebsstunden oder anhand anderer im Fahrbetrieb aufgenommener und ausgewerteter Daten (z. B. Umgebungsluft anhand Routenplanung/GPS, Auswertung der Anzahl an Luft-Luft-Starts, etc.).

In einer Weiterbildung erfolgt eine Analyse der Wirksamkeit der Regenerationsfunktion oder einzelner Schritte von dieser, um im weiteren Fahrbetrieb Einfluss auf die Steuerung zu nehmen. Wenn beispielsweise ein häufiger Betrieb im ländlichen Raum stattfindet, welcher zu einer verstärkten Kontamination der Elektroden mit Ammoniak aus Düngemitteln führt, kann vorgesehen sein, dass Betriebszustände gezielt angefahren werden, die zu einer spontanen Austragung dieses Kontaminanten führen. Ein solcher adaptiver Betrieb kann somit die schleichende Verschlechterung der Elektroden bremsen.

Weiterhin kann das Diagnosemodul 50 eine Vielzahl von Daten empfangen und auswerten. Beispielsweise kann es die Daten von bekannten Diagnosetestern zur Auswertung von Fehlereinträgen einlesen, Eingriffe von Assistenzsystemen des Fahrzeugs, Fahrprofile, Fahrrouten, Umgebungsbedingungen und weitere für die Wartung- und Diagnose relevante Fahrdaten einlesen und auswerten.

Es ist bevorzugt, dass nach Anschluss der externen Testgasversorgung an die entsprechenden Gasanschlüsse das Diagnosemodul sämtliche inplementierten Diagnose- und Regenerierungsfunktionen automatisiert ausführt.

### Bezugszeichenliste

- 1: Brennstoffzellensystem

- 10: Brennstoffzellenstapel / Brennstoffzelle
- 11: Einzelzelle
- 12: Anodenraum
- 13: Kathodenraum
- 14: Membran-Elektroden-Anordnung (MEA)
- 15: Bipolarplatte (Separatorplatte, Flussfeldplatte)

- 20: Anodenversorgung
- 21: Anodenversorgungspfad
- 22: Anodenabgaspfad
- 23: Drucktank
- 24: Rezirkulationsleitung
- 25: Fördereinrichtung/Strömungsmaschine
- 26: Strahlpumpe
- 27: Wasserabscheider
- 28: Spülleitung
- 29: Absperrelement / Absperrventil / Druckregelventil

- 30: Kathodenversorgung
- 31: Kathodenversorgungspfad
- 32: Kathodenabgaspfad
- 33: Verdichter
- 34: Turbine
- 35: Wastegate-Leitung
- 36: Stellmittel
- 37: Befeuchter

- 421: erstes Absperrelement
- 422: zweites Absperrelement
- 423: erster Gasanschluss
- 424: zweiter Gasanschluss
- 425: weiterer Gasanschluss
- 431: drittes Absperrelement
- 432: viertes Absperrelement
- 433: dritter Gasanschluss
- 434: vierter Gasanschluss

- 50: Diagnosemodul

## Patentansprüche

1. Brennstoffzellensystem (1) umfassend
einen Brennstoffzellenstapel (10);
eine Anodenversorgung (20) mit einem Anodenversorgungspfad (21) zur Zuführung eines Anodenbetriebsgases zu dem Brennstoffzellenstapel (10) und einem Anodenabgaspfad (22) zur Abführung eines Anodenabgases aus demselben;
eine Kathodenversorgung (30) mit einem Kathodenversorgungspfad (31) zur Zuführung eines Kathodenbetriebsgases zu dem Brennstoffzellenstapel (10) und einem Kathodenabgaspfad (32) zur Abführung eines Kathodenabgases aus demselben;
**dadurch gekennzeichnet, dass**
in dem Anodenversorgungspfad (21) und in dem Anodenabgaspfad (22) jeweils ein Absperrelement (29, 421, 422) angeordnet ist und zwischen dem Absperrelement (29, 421, 422) und dem Brennstoffzellenstapel (10) jeweils ein Gasanschluss (423, 424, 425) zum Anschluss an eine externe Prüfgasversorgung angeordnet ist, und/oder
in dem Kathodenversorgungspfad (31) und in dem Kathodenabgaspfad (32) jeweils ein Absperrelement (431, 432) angeordnet ist und zwischen dem Absperrelement (431, 432) und dem Brennstoffzellenstapel (10) jeweils ein Gasanschluss (433, 434) zum Anschluss an eine externe Prüfgasversorgung angeordnet ist.

2. Brennstoffzellensystem (1) nach Anspruch 1, wobei die Gasanschlüsse (423, 424, 425, 433, 434) selbstverschließend ausgebildet sind.

3. Brennstoffzellensystem (1) nach Anspruch 1 oder 2, wobei die Gasanschlüsse (423, 424, 425, 433, 434) angeordnet und ausgebildet sind, in einem in einem Fahrzeug verbauten Zustand des Brennstoffzellensystems (1) an die externe Prüfgasversorgung angeschlossen zu werden.

4. Brennstoffzellensystem (1) nach einem der Ansprüche 1 bis 3, ferner umfassend ein Diagnosemodul (50), das eingerichtet ist, die Absperrelemente (29, 421, 422) und Gasanschlüsse (423, 424, 425) der Anodenversorgung (20) und/oder die Absperrelemente (431, 432) und Gasanschlüsse (433, 434) der Kathodenversorgung (30) zu steuern.

5. Brennstoffzellensystem (1) nach einem der Ansprüche 1 bis 4, ferner umfassend ein Diagnosemodul (50), das eingerichtet ist, bei an den Gasanschlüssen (423, 424, 425) der Anodenversorgung (20) angeschlossener Prüfgasversorgung und/oder bei an den Gasanschlüssen (433, 434) der Kathodenversorgung (30) angeschlossener Prüfgasversorgung eine Diagnosefunktion zur Überprüfung des Brennstoffzellensystems (1) und/oder einer Wartungsfunktion zur Wartung des Brennstoffzellensystems (1) durchzuführen.

6. Brennstoffzellensystem (1) nach Anspruch 5, wobei das Diagnosemodul (50) ausgebildet ist, eine Dichtigkeitsprüfung des Brennstoffzellenstapels (10), der Anodenversorgung (20) und/oder der Kathodenversorgung (30) durchzuführen.

7. Brennstoffzellensystem (1) nach einem der Ansprüche 5 oder 6, wobei das Diagnosemodul (50) ausgebildet ist, eine Diagnosefunktion zur Bestimmung eines Zustands einer Membran (14) des Brennstoffzellenstapels (10), insbesondere zur Bestimmung eines Wasserstoffstroms durch die Membran (14), durchzuführen.

8. Brennstoffzellensystem (1) nach einem der Ansprüche 5 bis 7, wobei das Diagnosemodul (50) ausgebildet ist, eine Diagnosefunktion zur Bestimmung eines Zustands von katalytischen Elektroden des Brennstoffzellenstapels (10) durchzuführen.

9. Brennstoffzellensystem (1) nach einem der Ansprüche 5 bis 8, wobei das Diagnosemodul (50) ausgebildet ist, eine Regenerationsfunktion zur Wiederherstellung einer katalytischen Aktivität von katalytischen Elektroden des Brennstoffzellenstapels (10) durchzuführen.

## Claims

1. Fuel cell system (1) comprising:
a fuel cell stack (10);
an anode supply (20) with an anode supply path (21) for supplying an anode operating gas to the fuel cell stack (10) and an anode exhaust gas path (22) for removing an anode exhaust gas from the latter;
a cathode supply (30) with a cathode supply path (31) for supplying a cathode operating gas to the fuel cell stack (10) and a cathode exhaust gas path (32) for removing a cathode exhaust gas from the latter;
**characterised in that**
in the anode supply path (21) and in the anode exhaust gas path (22) respectively a shut-off element (29, 421, 422) is arranged, and between the shut-off element (29, 421, 422) and the fuel cell stack (10) respectively a gas connection (423, 424, 425) is arranged for connecting to an external test gas supply, and/or
in the cathode supply path (31) and in the cathode exhaust gas path (32) respectively a shut-off element (431, 432) is arranged, and between the shut-off element (431, 432) and the fuel cell stack (10) respectively a gas connection (433, 434) is arranged for connecting to an external test gas supply.

2. Fuel cell system (1) according to claim 1, wherein the gas connections (423, 424, 425, 433, 434) are configured to be self-closing.

3. Fuel cell system (1) according to claim 1 or 2, wherein the gas connections (423, 424, 425, 433, 434) are arranged and are configured to be connected, in a state of the fuel cell system (1) installed in a vehicle, to the external test gas supply.

4. Fuel cell system (1) according to any of claims 1 to 3, further comprising a diagnosis module (50), which is configured to control the shut-off elements (29, 421, 422) and gas connections (423, 424, 425) of the anode supply (20) and/or the shut-off elements (431, 432) and gas connections (433, 434) of the cathode supply (30).

5. Fuel cell system (1) according to any of claims 1 to 4, further comprising a diagnosis module (50), which is configured with a test gas supply connected to the gas connections (423, 424, 425) of the anode supply (20) and/or with a test gas supply connected to the gas connections (433, 434) of the cathode supply (30) to perform a diagnosis function for testing the fuel cell system (1) and/or a maintenance function for maintaining the fuel cell system (1).

6. Fuel cell system (1) according to claim 5, wherein the diagnosis module (50) is designed to perform a leakage check of the fuel cell stack (10), the anode supply (20) and/or the cathode supply (30).

7. Fuel cell system (1) according to any of claims 5 or 6, wherein the diagnosis module (50) is designed to perform a diagnosis function for determining a state of a membrane (14) of the fuel cell stack (10), in particular for determining a hydrogen flow through the membrane (14).

8. Fuel cell system (1) according to any of claims 5 to 7, wherein the diagnosis module (50) is designed to perform a diagnosis function for determining a state of the catalytic electrodes of the fuel cell stack (10).

9. Fuel cell system (1) according to any of claims 5 to 8, wherein the diagnosis module (50) is designed to perform a regeneration function for restoring a catalytic activity of catalytic electrodes of the fuel cell stack (10).

## Revendications

1. Système de piles à combustible (1) comprenant
un empilement de piles à combustible (10) ;
une alimentation d'anode (20) avec un chemin d'alimentation d'anode (21) pour fournir un gaz de fonctionnement d'anode à l'empilement de piles à combustible (10) et un chemin de gaz d'échappement d'anode (22) pour évacuer un gaz d'échappement d'anode de celui-ci ;
une alimentation de cathode (30) avec un chemin d'alimentation de cathode (31) pour fournir un gaz de fonctionnement de cathode à l'empilement de piles à combustible (10) et un chemin de gaz d'échappement de cathode (32) pour évacuer un gaz d'échappement de cathode de celui-ci ;
**caractérisé en ce**
**qu'**un élément de coupure (29, 421, 422) est disposé dans le chemin d'alimentation d'anode (21) et dans le chemin de gaz d'échappement d'anode (22) et un raccord de gaz (423, 424, 425) est disposé entre l'élément de coupure (29, 421, 422) et l'empilement de piles à combustible (10) pour le raccordement à une alimentation en gaz de test externe, et/ou
**qu'**un élément de coupure (431, 432) est disposé dans le chemin d'alimentation de cathode (31) et dans le chemin de gaz d'échappement de cathode (32) et un raccord de gaz (433, 434) est disposé entre l'élément de coupure (431, 432) et l'empilement de piles à combustible (10) pour le raccordement à une alimentation en gaz de test externe.

2. Système de piles à combustible (1) selon la revendication 1, dans lequel les raccords de gaz (423, 424, 425, 433, 434) sont conçus pour se fermer automatiquement.

3. Système de piles à combustible (1) selon la revendication 1 ou 2, dans lequel les raccords de gaz (423, 424, 425, 433, 434) sont disposés et conçus pour être raccordés, dans un état installé du système de piles à combustible (1) dans un véhicule, à l'alimentation en gaz de test externe.

4. Système de piles à combustible (1) selon l'une quelconque des revendications 1 à 3, comprenant en outre un module de diagnostic (50) qui est configuré pour commander les éléments de coupure (29, 421, 422) et les raccords de gaz (423, 424, 425) de l'alimentation d'anode (20) et/ou les éléments de coupure (431, 432) et les raccords de gaz (433, 434) de l'alimentation de cathode (30).

5. Système de piles à combustible (1) selon l'une quelconque des revendications 1 à 4, comprenant en outre un module de diagnostic (50) qui est configuré pour exécuter une fonction de diagnostic pour la vérification du système de piles à combustible (1) et/ou une fonction de maintenance pour l'entretien du système de piles à combustible (1) lorsque l'alimentation en gaz de test est raccordée aux raccords de gaz (423, 424, 425) de l'alimentation d'anode (20) et/ou lorsque l'alimentation en gaz de test est raccordée aux raccords de gaz (433, 434) de l'alimentation de cathode (30).

6. Système de piles à combustible (1) selon la revendication 5, dans lequel le module de diagnostic (50) est conçu pour exécuter un contrôle d'étanchéité de l'empilement de piles à combustible (10), de l'alimentation d'anode (20) et/ou de l'alimentation de cathode (30).

7. Système de piles à combustible (1) selon l'une quelconque des revendications 5 ou 6, dans lequel le module de diagnostic (50) est conçu pour exécuter une fonction de diagnostic pour déterminer un état d'une membrane (14) de l'empilement de piles à combustible (10), en particulier pour déterminer un flux d'hydrogène à travers la membrane (14).

8. Système de piles à combustible (1) selon l'une quelconque des revendications 5 à 7, dans lequel le module de diagnostic (50) est conçu pour exécuter une fonction de diagnostic pour déterminer un état d'électrodes catalytiques de l'empilement de piles à combustible (10).

9. Système de piles à combustible (1) selon l'une quelconque des revendications 5 à 8, dans lequel le module de diagnostic (50) est conçu pour exécuter une fonction de régénération pour restaurer une activité catalytique d'électrodes catalytiques de l'empilement de piles à combustible (10).
